# FASCICULE DE BREVET EUROPEEN

(11) **EP 0 779 088 B1**
(45) Date de publication et mention de la délivrance du brevet: **08.03.2000**
(21) Numéro de dépôt: 95203496.5
(22) Date de dépôt: 14.12.1995
(51) Int. Cl.: B01D 3/40, B01D 3/14, B01D 5/00, B01D 3/38, A23L 1/221, A23F 5/50

(54) **Appareil et procédé de distillation et d'extraction simultanées**
Vorrichtung und Verfahren zur gleichzeitigen Destillierung und Extraktion
Apparatus and process for simultaneous destillation and extraction

(43) Date de publication de la demande: 18.06.1997
(73) Titulaire: SOCIETE DES PRODUITS NESTLE S.A., 1800 Vevey (CH)
(72) Inventeur: Chaintreau, Alain, CH-1228 Plan-Les-Quates (CH); Maignial, Laurent, F-16100 Cognac (FR); Pollien, Philippe, CH-1073 Savigny (CH)
(74) Mandataire: Archambault, Jean

(56) Documents cités:
- EP-A- 0 056 174
- EP-A- 0 590 296
- PATENT ABSTRACTS OF JAPAN vol. 10, no. 314 (C-380), 24 Octobre 1986 & JP-A-61 127631 (CANON INC), 14 Juin 1986,
- PATENT ABSTRACTS OF JAPAN vol. 12, no. 50 (C-476), 16 Février 1988 & JP-A-62 197103 (MITSUBISHI KAKOKI KAISHA), 31 Août 1987,

## Description

L'invention concerne un appareil et a procédé de distillation et d'extraction simultanées de substances volatiles depuis un milieu aqueux vers un milieu solvant non-miscible à l'eau, utilisable notamment pour l'extraction d'arômes volatils dans des conditions ménagées.

Le procédé de distillation et d'extraction simultanées de substances volatiles est connu au niveau du laboratoire. Un appareil approprié dit "Likens-Nickerson" est décrit, par exemple dans Likens, S.T., Nikerson, G.B. ASBC proceedings 1964, 5-13. Ce procédé et cet appareil permettent l'extraction de composés volatiles à partir d'un mileu aqueux vers un mileu solvant organique non miscible à l'eau, sans qu'il n'y ait de contact entre le solvant organique et l'échantillon traité. Ainsi, le système évite d'extraire des substances indésirables du milieu traité, telles que, par exemple les lipides, pigments ou autre substances ne faisant pas partie de la fraction volatile désirée, ce qui pourrait se produire dans le cas d'un contact direct avec le solvant. Cet appareil ne permet cependant pas de travailler à l'échelle préparative et ne procure pas la flexibilité d'utilisation souhaitée, par exemple la possibilité d'opérer dans des conditions atmosphériques ou sous pression réduite dans les cas où l'on désire des conditions douces, en particulier de température, de manière à préserver des composants thermolabiles, ni de travailler soit par charges, soit en continu, c'est à dire dans des conditions modulables et variées.

L'appareil et le procédé selon l'invention se proposent de pallier les insuffisances de l'appareil et du procédé connu.

L'appareil selon l'invention comprend:
des moyens de distillation par entraînement à la vapeur de substances volatiles à partir d'un premier récipient contenant une dispersion aqueuse,
des moyens de condensation des vapeurs aqueuses contenant les substances volatiles,
des moyens de distillation d'a solvant organique non miscible à l'eau, de point d'ébullition voisin de celui de l'eau, à partir d'un second récipient le contenant,
des moyens de condensation des vapeurs de solvant distincts des moyens de condensation des vapeurs aqueuses,
des moyens d'extraction liquide/liquide des vapeurs aqueuses par le solvant condensé, reliés aux moyens de condensation des vapeurs aqueuses et aux moyens de condensation du solvant,
des moyens de séparation des extraits aqueux et des extraits organiques enrichis en lesdites substances volatiles provenant des moyens d'extraction et
des moyens de régulation de la pression reliés aux moyens de condensation des vapeurs aqueuses.

De préférence, les moyens d'extraction liquide/liquide sont pourvus de moyens d'agitation.

Avantageusement, le second récipient contenant le solvant est relié à une colonne de distillation placée entre ce dernier et les moyens de condensation du solvant.

Dans le cas d'une opération en continu, le premier récipient contenant la dispersion aqueuse est avantageusement relié à un système d'évaporation, notamment une colonne de strippage à travers laquelle la dispersion est pompée par l'intermédiaire d'une pompe.

L'invention concerne également un procédé de distillation et d'extraction simultanées de substances volatiles depuis un milieu aqueux vers un milieu solvant non-miscible à l'eau, caractérisé par le fait que l'on distille séparément le solvant et le milieu aqueux contenus dans des récipients distincts, qu'on les condense séparément, que l'on met en présence les condensats dans une cellule d'extraction sous agitation et que l'on sépare la phase aqueuse appauvrie et la phase organique enrichie en lesdites substances par décantation, de manière séparée de la cellule d'extraction.

Le solvant non miscible à l'eau utilisable dans le procédé de l'invention a un point d'ébullition à pression atmosphérique si possible relativement proche de celui de l'eau, de l'ordre de 30 à 180° C. Il est, de préférence, inférieur à celui de l'eau tout en en étant relativement proche, ce qui est avantageux dans la mesure où celà permet de ménager les substances thermolabiles, par exemple de l'ordre de 0 à 60° C à la pression de travail. Il peut être plus ou moins dense que l'eau. C'est, de préférence, un hydrocarbure aliphatique, un hydrocarbure aliphatique halogéné, un hydrocarbure alicyclique, un hydrocarbure aromatique, un éther, par exemple choisi parmi le dichlorométhane, le pentane, l'iso-octane, le toluène, le trichloroéthane, le trichloroéthène et le diéthyléther.

Les solvants précédents n'étant pas de qualité alimentaire, il peut être avantageux de choisir un solvant considéré comme comestible, par exemple un terpène, comme le limonène, l'alpha- et le bétapinène.

Dans la mesure où les substances volatiles extraites ont des points d'ébullition proches de celui du solvant, on utilise de préférence une colonne de distillation pour le solvant munie à sa base d'un tube de retour pour le solvant, afin de limiter la redistillation desdites substances avec le solvant.

Selon un premier mode de réalisation, par charges, on relie l'appareil à une pompe à vide permettant le travail, sous un vide quasi-statique, c'est à dire à pression réduite, jusqu'à pression atmosphérique, de préférence de 30 à 760 mbar.

Selon un second mode de réalisation, en continu, le récipient contenant le milieu aqueux peut être de grand volume et l'on peut pomper une quantité plus faible de milieu aqueux à travers une colonne de strippage et porter seulement cette colonne à la température d'ébullition, et ceci seulement pendant une durée limitée. Dans cette variante, le milieux aqueux peut être recyclé directement depuis la colonne de strippage vers le récipient. Dans cette variante, on peut également travailler sous pression réduite, avec un vide quasi-statique, ce qui est réalisé à l'aide d'une vanne régulée automatiquement par rapport à une valeur de référence de la pression.

Dans les deux variantes, la cellule d'extraction peut être de tout type connu, fonctionnant de manière à assurer un bon contact des distillats, par exemple à contre-courant ou sous agitation.

La séparation des phases a lieu de manière séparée de la cellule d'extraction, par décantation et, selon le programme d'utilisation, la phase aqueuse peut être recyclée vers le récipient contenant le milieu aqueux.

L'invention concerne également l'utilisation du procédé, pour extraire des substances sans leur faire subir de dégradation thermique à partir d'un milieux aqueux. En particulier, le procédé est applicable à l'extraction à froid, ou à température modérée, des substances aromatisantes et/ou odorantes thermolabiles présentes à l'état très dilué dans un milieux aqueux tel qu'une solution ou une dispersion, ou encore des substances d'extraction très difficile, par exemple un résidu aqueux contenant des arômes volatils. Il est particulièrement applicable à l'extraction de ces substances au fur et à mesure de leur génération, par exemple, lors d'une réaction enzymatique. On peut citer comme applications particulières, par exemple, l'isolement de mélanges aromatiques d'un extrait de café ou l'extraction de benzaldéhyde à partir d'une eau de traitement d'amandes, par exemple d'abricot.

L'appareil sera décrit plus en détail en référence aux dessins annexés illustrant deux modes de réalisation de l'appareil, donnés à titre d'exemples, dans lesquels:
La figure 1 est un schéma d'un premier mode de réalisation de l'appareil destiné au travail par charges,
la figure 2 est un schéma d'un second mode de réalisation de l'appareil destiné à l'extraction en continu et susceptible de traiter des quantités plus importantes de substrat,
les figures 3 et 4 sont respectivement, une vue en élévation et une vue de côté des moyens d'extraction des substances aromatiques et de condensation des vapeurs aqueuses,
les figures 5 et 6 sont respectivement, une vue en élévation et une vue de côté des moyens de distillation et de condensation du solvant,
la figure 7 est une vue en élévation des moyens de séparation des vapeurs aqueuses et de solvant,
la figure 8 est une coupe suivant AA de la figure 7 et
la figure 9 est une coupe suivant BB de la figure 7.

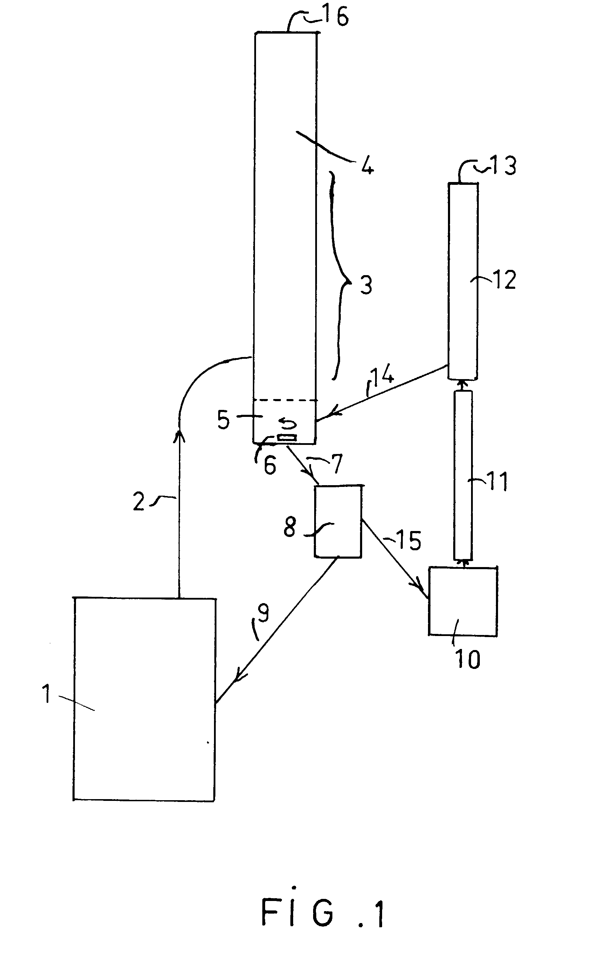

A la figure 1, le substrat aqueux contenu dans le récipient 1 est entrainé à la vapeur et distille par le tube 2 vers l'extracteur 3. L'extracteur 3 est constitué à sa partie supérieure d'un condenseur de vapeurs 4, réfrigéré, et à sa partie inférieure d'une chambre d'extraction liquide/liquide 5, munie d'un agitateur magnétique 6. Le bas de l'extracteur 3 est relié par le tube 7 à un séparateur 8, lui-même relié au récipent 1 par le tube 9, pour le recyclage du milieu aqueux condensé vers le récipient 1. Le récipient 10, contenant le solvant, est relié à la colonne de distillation 11. Le solvant est condensé dans le réfrigérant 12, d'où il est dirigé par le tube 14 vers la chambre d'extraction 5. Le solvant retourne à partir du séparateur 8 au récipient 10 par le tube 15. Au sommets des condenseurs 4 et 12 sont ménagées des sorties 13 et 16 vers un dispositif de mise sous vide.

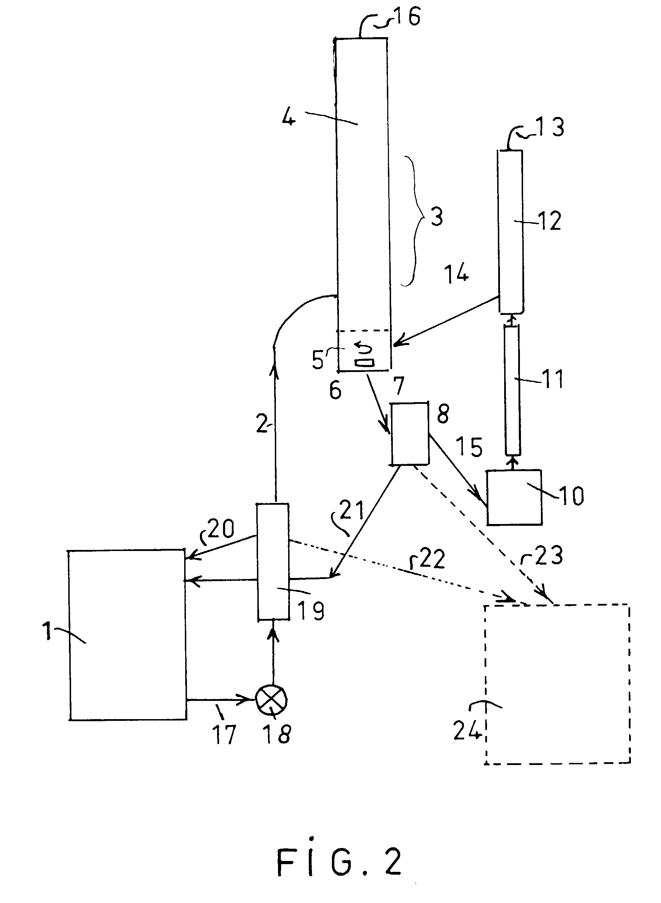

A la figure 2, les mêmes éléments sont représentés par les mêmes numéros que précédemment. Comme différences par rapport au mode de réalisation précédent, le récipient 1, de plus grande dimension, est relié, par l'intermédiaire du tube 17 et de la pompe 18, à une colonne de strippage 19. Les conduites 20 et 21 permettent le retour, respectivement du trop-plein de milieu aqueux provenant de la colonne de strippage 19 et des eaux provenant du séparateur 8 vers le récipient 1. Les conduites 22 et 23 assurent l'élimination des milieux aqueux épuisés, respectivement depuis la colonne de strippage 19 et le séparateur 8, vers le récipient 24 servant de poubelle.

Le montage de la figure 1 fonctionne de la manière suivante:
Dans le travail par charges à la pression atmosphérique, les récipients 1 et 10 sont chauffées aux températures d'ébullition de l'eau et du solvant et mis sous agitation magnétique. Le séparateur de phases 8 et les condenseurs 4 et 12 sont réfrigérés à - 1° C. Les sorties 13 et 16 sont ouvertes à la pression atmosphérique. Le solvant et l'eau distillent et les vapeurs sont condensées et les condensats recueillis dans l'extracteur 5 où ils sont mis en contact par agitation vigoureuse au moyen de l'agitateur magnétique 6 et d'où ils s'écoulent vers le séparateur 8 dans lequel deux phases apparaissent. Dans les modes de réalisation montrés, l'extraction liquide/liquide a lieu par contact des phases sous agitation vigoureuse. D'autres manières de réaliser l'extraction liquide/liquide pourraient être envisagés, par utilisation de n'importe que type d'extracteur, par exemple à contre-courant.

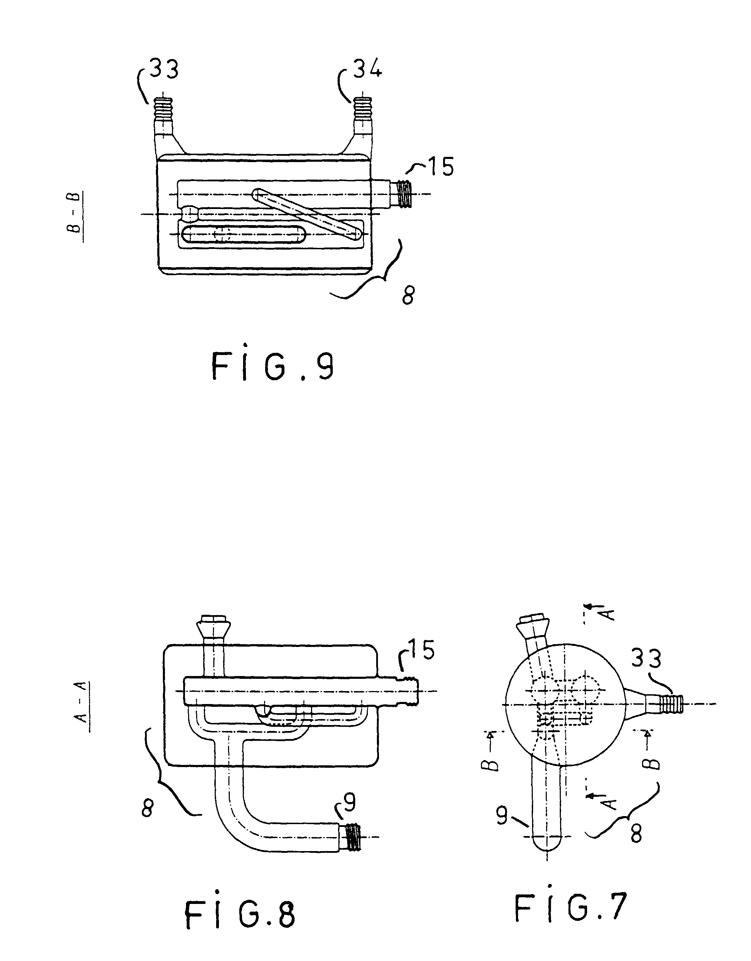

Dans le cas, par exemple, d'un solvant moins dense que l'eau, comme c'est montré aux figures 7 à 9, le solvant contenant l'extrait organique retourne vers le récipient 10 par l'embouchure du tube 15 située au dessus de l'embouchure du tube 9 par lequel la phase aqueuse épuisée retourne au récipient 1. Si l'on désire utiliser un solvant plus dense que l'eau, il suffit alors de relier l'embout du tube 9 au récipient 10 contenant le solvant, respectivement l'embout du tube 15 au récipient 1.

On peut travailler avec deux séparateurs/décanteurs 8 spécifiques dédiés, soit à un solvant moins dense que l'eau, soit à un solvant plus dense que l'eau, bien que l'on préfère, selon l'invention, mettre en oeuvre un séparateur polyvalent comme expliqué précédemment.

De cette façon, la fraction volatile contenant les composés organiques odorants est continuellement extraite sans qu'il n'y ait de contact direct entre la matrice et le solvant, ce qui signifie que seuls les constituants entraînés à la vapeur sont sélectionnés. Le rendement pondéral d'extraction au bout de 1 h environ est fréquemment > 90%.

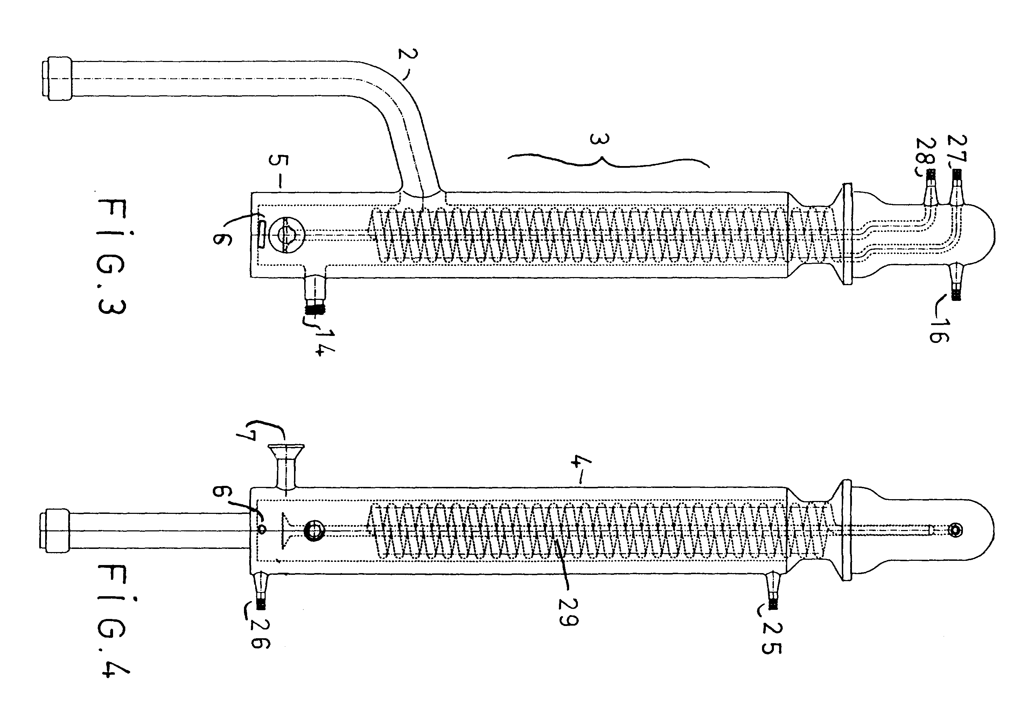

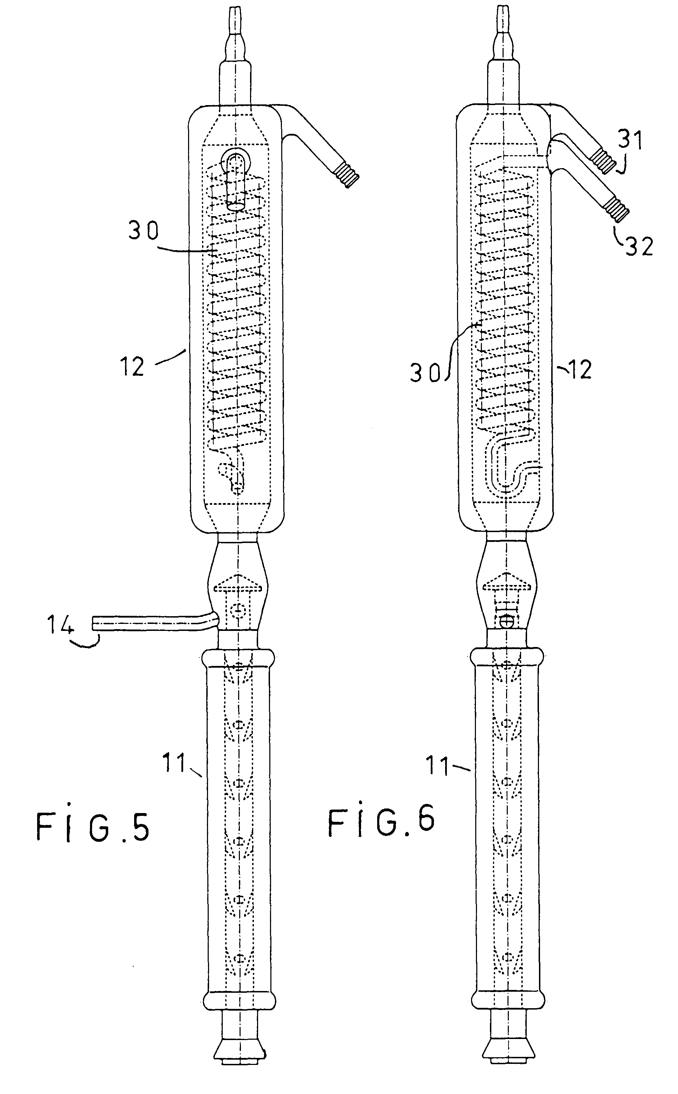

Avantageusement, le tube 2 a un large diamètre, ce qui permet un débit important de vapeur. Comme montré aux figures 3 et 4, l'extracteur 3 est réfrigéré au moyen de fluides circulant entre les embouts 25 et 26 pour le corps et respectivement les embouts 27 et 28 pour le serpentin 29 de la partie centrale de la partie condenseur 4. Comme c'est apparent sur les figures 5 et 6, la colonne de condensation du solvant 12 est également réfrigérée au moyen de fluides circulant par une double enveloppe et par le serpentin central 30 à partir des embouts 31 et 32. La colonne 11 évite, dans une large mesure, la redistillation avec le solvant des composés volatils de bas points d'ébullition recueillis avec ce dernier sous l'effet de la vapeur chaude, dans la mesure où le solvant condensé est introduit par le tube 14 directement dans la partie froide de la chambre d'extraction 5. De plus, du fait que les condenseurs de vapeur d'eau et de solvant sont distincts, il est possible de les faire fonctionner à des températures différentes. Par ailleurs, comme celà ressort des figures 7 à 9, le séparateur/décanteur 8 est muni d'une double enveloppe qui assure sa réfrigération par un fluide circulant entre les embouts 33 et 34.

La variante atmosphérique a cependant l'invonvénient de cuire les échantillons à 100° C pendant une durée relativement longue, ce qui modifie considérablement la composition qualitative et quantitative des composés volatils avec l'apparition de notes cuite, caramélisée et sucrée.

Il peut être préférable, de travailler sous pression réduite, par exemple dans le but d'éviter de détériorer les composants aromatiques par cuisson prolongée. Pour ce faire, on relie l'extracteur 3 et le condenseur 12 à une pompe à vide à partir des sorties 13 et 16, par l'intermédiaire d'une vanne automatique (non représentée) de régulation de la pression par rapport à une valeur de consigne. Ce système assure un vide quasi-statique dans l'extracteur. Le régulateur de pression ne pompe pas en continu à travers le système, puisque la vanne ne s'ouvre que si l'on dépasse la consigne de vide. On limite ainsi les pertes de composants aromatiques volatils qui interviendraient dans le cas d'un pompage de vide continu. Dans ce cas de travail sous pression réduite, il peut s'avérer particulièrement avantageux de refroidir le séparateur/décanteur 8 comme expliqué précédemment.

Dans la variante représentée à la figure 2, de fonctionnement en continu, il est possible de ne soumettre qu'une faible part de l'échantillon à la distillation par la colonne de strippage 19, la pompe 18 ne fournissant à la colonne de strippage 19 que la quantité nécessaire à la génération d'un débit de vapeur suffisant pour alimenter l'extracteur et réaliser l'entraînement à la vapeur. On peut, par exemple, faire passer la quantité à traiter dans un stripper maintenu, par exemple à 140° C. Ainsi, l'ensemble de l'échantillon contenu dans le récipient 1, qui peut être un réservoir de grande capacité, n'est pas soumis à la température de distillation pendant une longue durée, comme c'était le cas dans l'appareil Likens-Nikerson connu. De plus, il y a un intérêt accru à travailler en continu sous pression réduite, dans la mesure où cette dernière variante permet d'extraire une plus grande quantité de composés volatils en valeur absolue que dans le cas du travail par charges à partir d'un échantillon de plus grande taille, qui peut être très dilué.

Les exemples ci-après illustrent le procédé selon l'invention et certaines applications. Dans ceux-ci, les parties et pourcentages sont pondéraux, sauf indication contraire.

### Exemple 1

### Récupération d'un mélange d'arômes par charges à pression atmosphérique

En appliquant le procédé par charge à la pression atmosphérique et en utilisant le schéma de la figure 1, on a extrait les composés volatils d'un mélange de composés aromatisants avec différents solvants. Parmi les composés recherchés, le phényl éthanol et la coumarine ont été choisis comme représentants particulièrement difficiles à extraire avec un rendement acceptable.

Dans le tableau 1 ci-après, on a indiqué les conditions opératoires et les rendements obtenus (%), basés sur une concentration initiale de 15 mg/l de chaque composé, avec un échantillon de 2700 ml. Les quantités de composés aromatiques recueillis ont été determinées par chromatographie en phase gazeuse (GC), en utilisant le undécanol comme étalon interne.

**Tableau 1**

| Solvant | Pentane | Ether éthylique | Dichlorométhane | | | |
|---|---|---|---|---|---|---|
| Durée | 1h | 1h | 1h | 2h20 | 19h30 | 41h30 |
| Pyridine | 24,3 | 60,2 | 76,3 | 95,4 | 96,9 | 88,5 |
| Ethyl butyrate | 97,1 | 109,8 | 96,3 | 97,5 | 96,0 | 95,5 |
| *t*-2-Hexénal | 93,.2 | 104,7 | 93,4 | 97,7 | 97,1 | 98,9 |
| 2,6-Diméthylpyrazine | 30,.9 | 33,1 | 53,5 | 81,3 | 99,3 | 100,5 |
| Limonène | 99 | 110,8 | 93,6 | 98 | 97,3 | 97,8 |
| 2-Phényléthanol | 7,9 | 17 | 17,7 | 34,6 | 101 | 103,2 |
| Anéthol | 71,3 | 85,4 | 69,6 | 75,7 | 92,4 | 96,8 |
| Coumarine | < 1 | < 1 | 3,8 | 8,2 | 66,8 | 93,8 |
| Dodécanol | 77,.5 | 71,6 | 75 | 81,9 | 92,9 | 98 |

Les résultats ci-dessus montrent que l'efficacité de l'extraction suit approximativement la règle: pentane < éther < dichlorométhane.

### Exemple 2

### Récupération d'arôme de poulet par charges à la pression atmosphérique

On a soumis 10 litres de jus de cuisson de poulet à une extraction en appliquant le procédé par charge à la pression atmosphérique et en utilisant le schéma de la figure 1 pendant 3 h, en utilisant l'éther éthylique comme solvant. Après élimination de l'éther éthylique, l'extrait a présenté une flaveur typique de poulet cuit. Le facteur de concentration a été 60000 x, ce qui correspondait aux 18 ppm (partie par million) de composés volatils trouvés dans le jus de cuisson de poulet standard par GC après isolement par distillation/extraction simultanée au moyen d'un appareil classique de laboratoire.

### Exemple 3

### Récupération d'un mélange d'arômes en continu à pression atmosphérique

Le procédé par charge est limité en ce qui concerne la dimention de l'échantillon et le fait que l'échantillon doive être maintenu à la température d'ébullition de l'eau pendant le traitement, ce qui produit des dégradations thermiques. Dans le but de limiter ces dégradations, on a utilisé le montage de la figure 2, en plaçant l'échantillon à traiter dans le récipient réfrigéré 1 et en pompant à partir de ce récipient un débit continu d'échantillon par le tube 17 à l'aide de la pompe 18 vers la colonne de strippage 19. Ainsi, seulement une fraction de l'échantillon a été soumise à une température élevée et ceci uniquement pendant une courte durée.

A partir du même mélange de composés aromatiques que dans l'exemple 1, on a évalué le degré de récupération des substances volatiles. Dans un premier cas, on a recyclé le distillat aqueux condensé vers le récipient 1. Dans un second cas, on a recueilli le distillat dans un récipient séparé, sans le recycler. Les conditions opératoires et les résultats sont indiqués dans le tableau 2 ci-après, les rendements étant exprimés en %.

**Tableau 2**

| | Recyclage du distillat | | Sans recyclage du distillat | |
|---|---|---|---|---|
| Solvant | Ether | CH₂Cl₂ | Ether | CH₂Cl₂ |
| Durée | 23 h | 23 h | 8 h 30 (a) | 8 h 30 (a) |
| Pyridine | 21,9 | 75,5 | 5,2 | 50,5 |
| Ethyl butyrate | 62,4 | 86,2 | 61,6 | 81 |
| *t*-2-Hexénal | 64 | 86,7 | 60,7 | 81 |
| 2,6-Diméthylpyrazine | 32,1 | 80,1 | 14,9 | 55,9 |
| Limonène | 47,2 | 53,4 | 26,6 | 39,4 |
| 2-Phényléthanol | 56,3 | 62,5 | 31,6 | 34 |
| Anéthol | 73 | 69,9 | 29,6 | 32,5 |
| Coumarine | 32,2 | 33,2 | 9,3 | 11,1 |
| Dodécanol | 65,4 | 59,5 | 31,2 | 39,3 |

| | | | | |
|---|---|---|---|---|
| (a) Jusqu'à ce que 100 % de la charge de l'échantillon (5 l) ait passé à travers la colonne de strippage 19. | | | | |

### Exemple 4

### Récupération de benzaldéhyde à pression atmosphérique et en continu à partir d'eaux usées de traitement des amandes d'abricot

La préparation de lait d'amande d'abricot conduit à des eaux usées contenant du benzaldéhyde naturel. On ne peut pas récupérer le benzaldéhyde par strippage et décantation à partir du condensat à cause de sa solubilité dans l'eau qui est significative.

Ainsi, en utilisant l'installation selon la figure 2, on a traité une eau usée, soit 1,5 l d'un perméat d'ultrafiltration de lait d'amandes contenant 178 mg/kg de benzaldéhyde naturelle et des protéines, en la faisant passer avec un débit de 5 ml/min dans la colonne de strippage 19 maintenue à 135° C, pendant 5 h, sans recyclage. Pour l'extraction, on a utilisé 50 ml d'iso-octane.

Un seul passage de la solution dis la colonne de strippage a permis de récupérer 54% du benzaldéhyde.

### Exemple 5

### Récupération d'un mélange d'arômes par charges sous pression réduite

Le traitement sous pression réduite réduit considérablement les artéfacts dûs au traitement thermique. L'appareil selon la figure 1 a été mis en oeuvre en utilisant le trichoroéthène comme solvant, sous une pression quasi-statique de 48 mbar pour extraire un mélanges de substances aromatiques volatiles.

Les conditions opératoires et les rendements (%) obtenus sont indiqués dans le tableau 3 ci-après.

**Tableau 3**

| Durée | 1 h | 2 h | 5 h | 7 h | 23 h |
|---|---|---|---|---|---|
| Pyridine | 35,6 | 42,1 | 48,3 | 49,3 | 47 |
| Ethyl butyrate | 60 | 64,7 | 69,9 | 75,5 | 72,2 |
| *t*-2-Hexénal | 64,7 | 70,7 | 76,4 | 81,5 | 80,4 |
| 2,6-Diméthylpyrazine | 14,6 | 23,6 | 48,6 | 59,5 | 65,2 |
| Limonène | 66,3 | 67,6 | 71,2 | 75,2 | 76,3 |
| 2-Phényléthanol | 2,6 | 5,2 | 13,9 | 20,6 | 36,8 |
| Anéthol | 76,4 | 84,4 | 84,6 | 88,5 | 87,1 |
| Coumarine | 1,3 | 2,3 | 6,1 | 8,2 | 27,3 |
| Dodécanol | 43,2 | 67,3 | 93,4 | 90,7 | 95,3 |

Les résultats montrent que le rendement en pyridine a été relativement bas, ce qui peut s'expliquer par son bas point d'ébullition, son coefficient de partage air/trichloroéthène étant 0,35 sous 48 mbar. On ne peut donc pas négliger le phénomène de redistillation dans la mesure où la différence entre les points d'ébullition du solvant et du soluté est plus faible sous pression réduite qu'à pression atmosphérique.

### Exemple 6

### Récupération d'un mélange d'arômes par charges sous pression réduite

On a traité un mélange de substances aromatiques volatiles par charges en utilisant l'installation de la figure 1. On a utilisé le limonène en tant que solvant de qualité alimentaire et le traitement a eu lieu sous une pression de 48 mbar, pendant 2h 20. Les rendements sont indiqués dans le tableau 4 ci-après.

**Tableau 4**

| Substance aromatique volatile | Rendement (%) |
|---|---|
| 2-Phényléthanol | 2,3 |
| Anéthol | 75,4 |
| Coumarine | 1 |
| Dodécanol | 100,3 |

L'anéthol et le dodécanol ont été isolés avec de bons rendements, ce qui montre que l'on peut utiliser des solvants de qualité alimentaire pour extraire des substances aromatisantes de point d'ébullition élevé.

### Exemple 7

### Récupération d'arômes du café à partir d'un extrait par charges sous pression réduite

L'analyse des arômes requiert souvent le fractionnement des substances volatiles et leur concentration. Préalablement à cette étape, on doit isoler une quantité suffisante de la fraction volatile: la méthode de distillation/extraction simultanée sous pression réduite permet l'extraction à l'échelle préparative. Il est connu que l'arôme de café est altéré si l'extrait est chauffé pendant longtemps. On a donc isolé les arômes d'un extrait de café sous 48 mbar à 31-32°C avec le trichloroéthène en utilisant l'appareil de la figure 1, puis on a analysé l'extrait au trichloroéthène par GC. Il a été ainsi possible d'analyser le profil complet de l'arôme de café non altéré, ce qui n'était pas le cas avec les méthodes connues.

### Exemple 8

### Extraction du benzaldéhyde naturel par charges sous pression réduite

Le benzaldéhyde naturel peut être extrait des gâteaux de pressage d'amande d'abricot. En appliquant à l'échantillon une température de 35-40°C et en utilisant l'appareil selon la figure 1 sous pression réduite de 48 mbar, on a réalisé des conditions compatibles avec les réactions enzymatiques. On a ainsi hydrolysé l'amygdaline par la béta-glycosidase. On a utilisé les gâteaux de pressage des amandes d'abricot qui contiennent le glucoside et l'enzyme endogène. L'amygdaline a été hydrolysée pendant 6 h dans le récipent 1, cependant que le benzaldéhyde a été extrait en continu dès sa formation en utilisant l'iso-octane comme solvant. Le rendement obtenu a été de 80,4 %.

On voit donc que le procédé selon l'invention de distillation/extraction simultanée préparative sous pression réduite convient à la génération et à la récupération simultanée de bioarômes, même lorsque le milieu réactionnel est une dispersion. Dans de telles conditions, les particules solides conduiraient à des problèmes de colmatage dans le cas d'utilisation de membranes dans le but de récupérer en continu les produits de la bioréaction.

### Exemple 9

### Récupération d'un mélange d'arômes en continu sous pression réduite

En utilisant l'appareil selon la figure 2, on a pompé en continu un cocktail de substances aromatiques volatiles dans une colonne de strippage 19, sous une pression de 48 mbar avec recyclage du distillat. Les résultats sont indiqués dans le tableau 5 ci-après.

**Tableau 5**

| Composé | Traitement en continu | | Traitement par charges |
|---|---|---|---|
| | Rendement (%) | Quantité (mg) | Quantité (mg) |
| Pyridine | 17 | 6,8 | 19 |
| Ethyl butyrate | 92 | 36,8 | 29,2 |
| *t*-2-Hexénal | 32 | 12,8 | 32,6 |
| 2,6-Diméthylpyrazine | 29 | 11,6 | 26,4 |
| Limonène | 79 | 31,6 | 30,9 |
| Phényléthanol | 30 | 12 | 14,9 |
| Anéthol | 90 | 36 | 35,3 |
| Coumarine | 46 | 18,4 | 11,1 |
| Dodécanol | 89 | 35,6 | 28,6 |

Une bonne récupération a été obtenue après 23 h, à l'exception des composés de bas point d'ébullition ou de ceux qui sont lentement récupérés par la méthode de distillation/extraction simultanée. On notera que le volume d'échantillon a été plus grand (4,5 l) que dans le cas d'un traitement par charges (2,7 l). En dépit d'une concentration initiale plus faible dans le traitement en continu (8,9 mg/l) que dans le traitement par charges (15 mg/l), les quantités absolues récupérées dans le récipient de solvant après 23 h ont été comparables, du fait que l'on peut traiter un volume plus important dans le traitement en continu.

En conséquence, cette technique peut être utilisée pour récupérer des arômes dilués à partir de grands volumes d'échantillons.

## Revendications

1. Procédé de distillation et d'extraction simultanées de substances volatiles depuis un milieu aqueux vers un milieu solvant non-miscible à l'eau, utilisable notamment pour l'extraction d'arômes volatils dans des conditions ménagées, caractérisé par le fait que l'on distille séparément le solvant et le milieu aqueux contenus dans des récipients distincts, qu'on les condense séparément, que l'on met en présence les condensats dans une cellule d'extraction et que l'on sépare la phase aqueuse appauvrie et la phase organique enrichie en lesdites substances par décantation, de manière séparée de la cellule d'extraction.

2. Procédé selon la revendication 1, caractérisé par le fait que le solvant non miscible à l'eau a a point d'ébullition à pression atmosphérique relativement proche de celui de l'eau, de l'ordre de 30 à 180° C et notamment inférieur à celui de l'eau tout en en étant relativement proche, de l'ordre de 0 à 60° C à la pression de travail.

3. Procédé selon la revendication 1, caractérisé par le fait que le solvant est plus ou moins dense que l'eau et est un hydrocarbure aliphatique, un hydrocarbure aliphatique halogéné, un hydrocarbure alicyclique, un hydrocarbure aromatique, un éther, notamment choisi parmi le dichlorométhane, le pentane, l'iso-octane, le toluène, le trichloroéthane, le trichloroéthène et le diéthyléther.

4. Procédé selon la revendication 1, caractérisé par le fait que le solvant est de qualité alimentaire, notamment un terpène, comme le limonène, l'alpha- et le bétapinène.

5. Procédé selon la revendication 1, caractérisé par le fait que le traitement est par charges et que l'on relie l'appareil à une pompe à vide permettant le travail, sous un vide quasi-statique, c'est à dire à pression réduite, jusqu'à pression atmosphérique, notamment de 30 à 760 mbar.

6. Procédé selon la revendication 1, caractérisé par le fait que le traitement est en continu, que le récipient contenant le milieu aqueux est de grand volume et que l'on pompe une quantité plus faible de milieu aqueux à travers un système d'évaporation, notamment une colonne de strippage et que l'on porte seulement ce système à la température d'ébullition, et ceci seulement pendant une durée limitée.

7. Procédé selon la revendication 6, caractérisé par le fait que le milieux aqueux peut être recyclé directement depuis la colonne de strippage vers le récipient, que l'on peut travailler sous pression réduite, avec un vide quasi-statique, ce qui est réalisé à l'aide d'une vanne régulée automatiquement par rapport à une valeur de référence de la pression.

8. Procédé selon la revendication 1, caractérisé par le fait que l'extraction a lieu à contre-courant ou sous agitation.

9. Appareil de distillation et d'extraction simultanées de substances volatiles, caractérisé par le fait qu'il comprend:
des moyens de distillation par entraînement à la vapeur de substances volatiles à partir d'un premier récipient contenant une dispersion aqueuse,
des moyens de condensation des vapeurs aqueuses contenant les substances volatiles,
des moyens de distillation d'un solvant organique non miscible à l'eau, de point d'ébullition voisin de celui de l'eau, à partir d'un second récipient le contenant,
des moyens de condensation des vapeurs de solvant distincts des moyens de condensation des vapeurs aqueuses,
des moyens d'extraction liquide/liquide des vapeurs aqueuses condensées par le solvant condensé, reliés aux moyens de condensation des vapeurs aqueuses et aux moyens de condensation du solvant,
des moyens de séparation des extraits aqueux et des extraits organiques enrichis en lesdites substances volatiles provenant des moyens d'extraction et
des moyens de régulation de la pression reliés aux moyens de condensation des vapeurs aqueuses.

10. Appareil selon la revendication 9, caractérisé par le fait que les moyens d'extraction liquide/liquide sont pourvus de moyens d'agitation.

11. Appareil selon la revendication 9, caractérisé par le fait que le second récipient contenant le solvant est relié à une colonne de distillation placée entre ce dernier et les moyens de condensation du solvant.

12. Appareil selon la revendication 9, caractérisé par le fait que, dans le cas d'une opération en continu, le premier récipient contenant la dispersion aqueuse est relié à un système d'évaporation, notamment une colonne de strippage à travers laquelle la dispersion est pompée par l'intermédiaire d'une pompe.

13. Appareil selon la revendication 9, caractérisé par le fait qu'il est pourvu d'une colonne de distillation pour le solvant munie à sa base d'un tube de retour pour le solvant, afin de limiter la redistillation desdites substances avec le solvant.

14. Utilisation du procédé selon l'une des revendications 1 à 8, pour extraire des substances sans leur faire subir de dégradation thermique à partir d'un milieux aqueux.

15. Utilisation selon la revendication 14, pour l'extraction à froid, ou à température modérée, des substances aromatiques thermolabiles présentes à l'état très dilué dans un milieux aqueux tel qu'une solution ou une dispersion, ou encore des substances d'extraction très difficile, notamment un résidu aqueux contenant des arômes volatils.

16. Utilisation selon la revendication 14, pour l'extraction de substances au fur et à mesure de leur génération, notamment, lors d'une réaction enzymatique.

17. Utilisation selon la revendication 14, pour l'isolement de mélanges de substances aromatisantes d'un extrait de café ou l'extraction de benzaldéhyde à partir d'une eau de traitement d'amandes, notamment d'abricot.

## Patentansprüche

1. Verfahren zur gleichzeitigen Destillation und Extraktion von flüchtigen Substanzen aus einem wäßrigen Medium in ein mit Wasser nicht mischbares Lösemittelmedium, das besonders zur Extraktion von flüchtigen Aromastoffen unter schonenden Bedingungen geeignet ist, dadurch gekennzeichnet, daß man getrennt voneinander das Lösemittel und das wäßrige Medium, die in getrennten Behältern vorliegen, destilliert, daß man sie getrennt voneinander kondensiert, daß man die Kondensate in einer Extraktionszelle vereinigt und daß man die wäßrige Phase, die an den Substanzen verarmt ist, und die organische Phase, die mit den Substanzen angereichert ist, durch Dekantieren trennt, und zwar getrennt von der Extraktionszelle.

2. Verfahren nach Anspruch 1, dadurch gekennzeichnet, daß das mit Wasser nicht mischbare Lösemittel bei Atmosphärendruck einen Siedepunkt aufweist, der relativ nahe bei dem von Wasser liegt, in der Größenordnung von 30 bis 180° C, und insbesondere niedriger liegt als der von Wasser und diesem relativ nahe, in der Größenordnung von 0 bis 60° C bei Arbeitsdruck.

3. Verfahren nach Anspruch 1, dadurch gekennzeichnet, daß das Lösemittel eine höhere oder niedrigere Dichte als Wasser aufweist und ein aliphatischer Kohlenwasserstoff, ein halogenierter aliphatischer Kohlenwasserstoff, ein alicyclischer Kohlenwasserstoff, ein aromatischer Kohlenwasserstoff, ein Ether ist und insbesondere ausgewählt ist aus Dichlormethan, Pentan, Isooctan, Toluol, Trichlorethan, Trichlorethen und Diethylether.

4. Verfahren nach Anspruch 1, dadurch gekennzeichnet, daß das Lösemittel Nahrungsmittelqualität aufweist, insbesondere ein Terpen wie Limonen, alpha- und beta-Pinen ist.

5. Verfahren nach Anspruch 1, dadurch gekennzeichnet, daß die Behandlung chargenweise erfolgt, und daß man die Vorrichtung an eine Vakuumpumpe anschließt, die das Arbeiten bei einem quasi-statischen Vakuum, d.h. bei einem verminderten Druck bis zum Atmosphärendruck, insbesondere bei 30 bis 760 mbar, ermöglicht.

6. Verfahren nach Anspruch 1, dadurch gekennzeichnet, daß die Behandlung kontinuierlich erfolgt, daß der Behälter, der das wäßrige Medium enthält, ein großes Volumen hat, und daß man eine viel kleinere Menge des wäßrigen Mediums durch ein Verdampfungssystem, insbesondere eine Stripperkolonne, pumpt und daß man nur dieses System für eine begrenzte Zeitdauer einer Verdampfungstemperatur aussetzt.

7. Verfahren nach Anspruch 6, dadurch gekennzeichnet, daß das wäßrige Medium direkt von der Stripperkolonne zu dem Behälter rückgeführt werden kann, daß man unter vermindertem Druck mit einem quasi-statischen Vakuum arbeiten kann, was mit Hilfe eines automatisch regulierten Ventils unter Bezug auf einen Druckreferenzwert bewirkt wird.

8. Verfahren nach Anspruch 1, dadurch gekennzeichnet, daß die Extraktion im Gegenstrom oder unter Rühren durchgeführt wird.

9. Vorrichtung zur gleichzeitigen Destillation und Extraktion von flüchtigen Substanzen, dadurch gekennzeichnet, daß sie umfaßt:
Destillationseinrichtungen zur Wasserdampfdestillation flüchtiger Substanzen aus einem ersten Behälter, der eine wäßrige Dispersion enthält,
Kondensationseinrichtungen für die wäßrigen Dämpfe, die die flüchtigen Substanzen enthalten,
Destillationseinrichtungen für ein mit Wasser nicht mischbares organisches Lösemittel, das einen ähnlichen Siedepunkt wie Wasser aufweist, aus einem zweiten Behälter, der das Lösemittel enthält,
Kondensationseinrichtungen für die Dämpfe des Lösemittels, die von den Kondensationseinrichtungen für die wäßrigen Dämpfe getrennt sind,
Einrichtungen zur Flüssig/Flüssig-Extraktion der kondensierten wäßrigen Dämpfe mit dem kondensierten Lösemittel, die mit den Kondensationseinrichtungen für die wäßrigen Dämpfe und mit den Kondensationseinrichtungen für das Lösemittel verbunden sind,
Einrichtungen zur Trennung der wäßrigen Extrakte und der organischen Extrakte, die mit den flüchtigen Substanzen angereichert sind, aus den Extraktionseinrichtungen und
Druckregeleinrichtungen, die an die Kondensationseinrichtungen für die wäßrigen Dämpfe angeschlossen sind.

10. Vorrichtung nach Anspruch 9, dadurch gekennzeichnet, daß die Flüssig/Flüssig-Extraktionseinrichtungen mit Rühreinrichtungen ausgestattet sind.

11. Vorrichtung nach Anspruch 9, dadurch gekennzeichnet, daß der zweite Behälter, der das Lösemittel enthält, mit einer Destillationskolonne verbunden ist, die zwischen dem Behälter und den Kondensationseinrichtungen des Lösemittels angeordnet ist.

12. Vorrichtung nach Anspruch 9, dadurch gekennzeichnet, daß im Falle einer kontinuierlichen Betriebsweise der erste Behälter, der die wäßrige Dispersion enthält, an ein Verdampfungssystem angeschlossen ist, insbesondere an eine Stripperkolonne, durch die die Dispersion mittels einer Pumpe gepumpt wird.

13. Vorrichtung nach Anspruch 9, dadurch gekennzeichnet, daß sie mit einer Destillationskolonne für das Lösemittel ausgestattet ist, die am unteren Ende mit einem Rückführungsrohr für das Lösemittel versehen ist, um die Redestillation der Substanzen mit dem Lösemittel zu begrenzen.

14. Anwendung des Verfahrens nach einem der Ansprüche 1 bis 8 zum Extrahieren von Substanzen aus einem wäßrigen Medium, ohne sie einer thermischen Zersetzung auszusetzen.

15. Anwendung nach Anspruch 14 zur Kaltextraktion oder zur Extraktion bei mäßiger Temperatur von thermolabilen aromatischen Substanzen, die in einem sehr verdünnten Zustand in einem wäßrigen Medium, wie einer Lösung oder einer Dispersion, vorliegen, oder auch von Substanzen, deren Extraktion sehr schwierig ist, insbesondere aus einem wäßrigen Rückstand, der flüchtige Aromastoffe enthält.

16. Anwendung nach Anspruch 14 zur schrittweisen Extraktion von Substanzen nach ihrer Bildung, insbesondere bei einer enzymatischen Reaktion.

17. Anwendung nach Anspruch 14 zur Isolierung von Mischungen von aromatisierenden Substanzen aus einem Kaffeextrakt oder zur Extraktion von Benzaldehyd aus einem Wasser zur Behandlung von Samen, insbesondere von Aprikosen.

## Claims

1. Process for simultaneously distilling and extracting volatile substances from an aqueous medium to a water immiscible solvent medium, which can be used in particular for extracting volatile flavours under controlled conditions, characterized in that the solvent and the aqueous medium contained in distinct receptacles are distilled separately, in that they are condensed separately, in that the condensates are brought together in an extraction cell and in that the depleted aqueous phase and the organic phase enriched in the said substances are separated by decantation, separately from the extraction cell.

2. Process according to claim 1, characterized in that the water-immiscible solvent has a boiling point at atmospheric pressure relatively close to that of water, of the order of 30 to 180°C and in particular lower than that of water while being relatively close thereto, of the order of 0 to 60°C, at the working pressure.

3. Process according to claim 1, characterized in that the solvent is more or less dense than water and is an aliphatic hydrocarbon, a halogenated aliphatic hydrocarbon, an alicyclic hydrocarbon, an aromatic hydrocarbon or an ether, selected in particular from dichloromethane, pentane, iso-octane, toluene, trichloroethane, trichloroethene and diethylether.

4. Process according to claim 1, characterized in that the solvent is of food quality, in particular a terpene, such as limonene, alpha- and betapinene.

5. Process according to claim 1, characterized in that the treatment is in batches and in that the apparatus is connected to a vacuum pump making it possible to work under a virtually static vacuum, namely at reduced pressure up to atmospheric pressure, in particular from 30 to 760 mbar.

6. Process according to claim 1, characterized in that the treatment is continuous, that the receptacle containing the aqueous medium has a large volume and in that a smaller quantity of the aqueous medium is pumped through an evaporation system, in particular a stripping column, and in that only this system is raised to the boiling temperature, and this only for a limited period.

7. Process according to claim 6, characterized in that the aqueous medium may be recycled directly from the stripping column to the receptacle, and that it is possible to work under reduced pressure, with a virtually static vacuum, which is achieved with the aid of a valve regulated automatically in relation to a reference pressure value.

8. Process according to claim 1, characterized in that extraction takes place counter-currently or with stirring.

9. Apparatus for the simultaneous distillation and extraction of volatile substances, characterized in that it comprises:
means for distilling volatile substances by steam entrainment from a first receptacle containing an aqueous dispersion,
means for condensing the aqueous vapours containing the volatile substances,
means for distilling a water-immiscible organic solvent, with a boiling point close to that of water, from a second receptacle containing it,
means for condensing the solvent vapours distinct from the means for condensing the aqueous vapours,
means for the liquid/liquid extraction of the condensed aqueous vapours by the condensed solvent, connected to the means for condensing the aqueous vapours and to the means for condensing the solvent,
means for separating the aqueous extracts and the organic extracts enriched in the said volatile substances coming from the means of extraction and
means for regulating the pressure connected to the means for condensing the aqueous vapours.

10. Apparatus according to claim 9, characterized in that the means of liquid/liquid extraction are provided with means of agitation.

11. Apparatus according to claim 9, characterized in that the second receptacle containing the solvent is connected to a distillation column placed between the latter and the means for condensing the solvent.

12. Apparatus according to claim 9, characterized in that, in the case of a continuous operation, the first receptacle containing the aqueous dispersion is connected to an evaporating system, in particular a stripping column, through which the dispersion is pumped by means of a pump.

13. Apparatus according to claim 9, characterized in that it is provided with a distillation column for the solvent, provided at its base with a return tube for the solvent, so as to limit the redistillation of the said substances with the solvent.

14. Use of the process according to one of claims 1 to 8, for extracting substances from an aqueous medium without causing them to undergo thermal degradation.

15. Use according to claim 14 for the cold extraction or extraction at a moderate temperature, of thermolabile aromatic substances present in a very dilute state in an aqueous medium such as a solution or a dispersion, or furthermore of substances very difficult to extract, in particular an aqueous residue containing volatile flavours.

16. Use according to claim 14, for extracting substances as they are generated, in particular during an enzymatic reaction.

17. Use according to claim 14, for the isolation of mixtures of flavouring substances from a coffee extract or for the extraction of benzaldehyde from water for treating kernels, in particular apricot kernels.
